# EUROPÄISCHE PATENTSCHRIFT

(11) **EP 2 928 674 B1**
(45) Veröffentlichungstag und Bekanntmachung des Hinweises auf die Patenterteilung: **28.03.2018**
(21) Anmeldenummer: 13807929.8
(22) Anmeldetag: 05.12.2013
(51) Int. Cl.: B29C 70/44, B29C 70/08, B29L 22/00, B29C 70/46, B29C 33/40, B29C 33/76

(54) **VERFAHREN ZUR HERSTELLUNG EINER ENDLOSFASERVERSTÄRKTEN HOHLKÖRPERSTRUKTUR, SOWIE HIERMIT HERGESTELLTE ENDLOSFASERVERSTÄRKTE HOHLKÖRPERSTRUKTUR**
METHOD FOR PRODUCING A CONTINUOUS-FIBRE-REINFORCED HOLLOW-BODY STRUCTURE, AND CONTINUOUS-FIBRE-REINFORCED HOLLOW-BODY STRUCTURE PRODUCED THEREBY
PROCÉDÉ DE PRODUCTION D'UNE STRUCTURE DE CORPS CREUX RENFORCÉE PAR FIBRES CONTINUES ET STRUCTURE DE CORPS CREUX RENFORCÉE PAR FIBRES CONTINUES OBTENUE SELON LEDIT PROCÉDÉ

(30) Priorität: 10.12.2012 DE 102012112021
(43) Veröffentlichungstag der Anmeldung: 14.10.2015
(73) Patentinhaber: REHAU AG + Co, 95111 Rehau (DE)
(72) Erfinder: MICHEL, Peter, 95028 Hof (DE); STIELER, Thomas, 08253 Plauen (DE)
(86) Internationale Anmeldenummer: PCT/EP2013/003685
(87) Internationale Veröffentlichungsnummer: WO 2014/090385

(56) Entgegenhaltungen:
- EP-A1- 2 236 262
- EP-A1- 2 433 779
- US-B1- 6 485 668

## Beschreibung

Die vorliegende Erfindung betrifft ein Verfahren zur Herstellung einer endlosfaserverstärkten Hohlkörperstruktur. Ein gattungsgemäßes Verfahren zur Herstellung einer endlosfaserverstärkten Hohlkörperstruktur umfasst die folgenden Schritte: Bereitstellen eines profilförmigen Hohlkörpers, wobei der Hohlkörper aus einem Verbund gebildet ist, der thermoplastische Matrixfasern und temperaturstabile Endlos-Verstärkungsfasern umfasst, Anordnen eines Expansionsprofils innerhalb des Hohlkörpers, Erwärmen des Hohlkörpers bis über die Schmelztemperatur der Matrixfasern, Aufnehmen des Hohlkörpers innerhalb eines Formwerkzeug-Hohlraumes, der von mindestens einer Formwerkzeug-Wandung umschlossen wird, welche die Kontur der Hohlkörperstruktur definiert, Konsolidieren und / oder Thermoformen des Hohlkörpers durch Anlegen des Hohlkörpers an die Formwerkzeug-Wandung mittels einer Druckbeaufschlagung eines in dem Expansionsprofil befindlichen und / oder eingebrachten Druckmediums, Abkühlen und Entnehmen der gebildeten Hohlkörperstruktur. Das vorgenannte gattungsgemäße Verfahren wird auch als Schlauchblasverfahren bezeichnet, wobei ein Hohlkörper, der aus einem Verbund gebildet ist, der thermoplastische Matrixfasern und temperaturstabile Endlos-Verstärkungsfasern umfasst, mittels eines als Expansionsprofil ausgebildeten dickwandigen Elastomerschlauch thermogeformt und konsolidiert wird. Nach der Entnahme der gebildeten Hohlkörperstruktur aus dem Formwerkzeug muss der verwendete Elastomerschlauch jedoch wieder aus dem Bauteil gezogen werden. Dieser Vorgang kann, aufgrund von komplexen Konturen und Hinterschnitten der Hohlkörperstruktur, mit einem hohen Kraftaufwand verbunden sein und in Folge zum Reißen des Elastomerschlauchs führen. Des Weiteren sind die verwendeten Elastomerschläuche relativ kostenintensiv in der Anschaffung und können darüber hinaus in der Regel nur wenige Male verwendet werden, bevor es zu einer Zerstörung des Elastomerschlauchs kommt. In Folge sind sowohl die Materialkosten zur Herstellung einer Hohlkörperstruktur sehr hoch, als auch, aufgrund der erhöhten Zykluszeit durch das aufwändige Entfernen des Elastomerschlauchs, die entsprechenden Herstellkosten. Ein weiterer Nachteil bei der Verwendung von Silikon als Elastomermaterial für den Elastomerschlauch ist dessen hohe Permeationsrate von Luft, was insbesondere bei den erhöhten Temperaturen bei der Thermoformung und/oder Konsolidierung gilt. Hierdurch können sich in der Hohlkörperstruktur Lufteinschlüsse bilden, die nach der Fertigstellung der Hohlkörperstruktur dessen Festigkeit herabsetzen.

Gattungsbildende Verfahren sind den Dokumenten US 6 485 668 B1 und EP 2 236 262 A1 zu entnehmen.

Die Erfindung stellt sich daher die Aufgabe ein Verfahren mit den eingangs beschriebenen Merkmalen so zu verbessern, dass die Hohlkörperstruktur in einer besseren Qualität, kostengünstiger und mit verkürzten Zykluszeiten herstellbar ist.

Erfindungsgemäß wird die Aufgabe gelöst durch ein Verfahren zur Herstellung einer endlosfaserverstärkten Hohlkörperstruktur, umfassend die folgenden Schritte: Bereitstellen eines profilförmigen Hohlkörpers, wobei der Hohlkörper aus einem Verbund gebildet ist, der thermoplastische Matrixfasern und temperaturstabile Endlos-Verstärkungsfasern umfasst, Anordnen eines Expansionsprofils innerhalb des Hohlkörpers, Erwärmen des Hohlkörpers bis über die Schmelztemperatur der Matrixfasern, Aufnehmen des Hohlkörpers innerhalb eines Formwerkzeug-Hohlraumes, der von mindestens einer Formwerkzeug-Wandung umschlossen wird, welche die Kontur der Hohlkörperstruktur definiert, Konsolidieren und / oder Thermoformen des Hohlkörpers durch Anlegen des Hohlkörpers an die Formwerkzeug-Wandung mittels einer Druckbeaufschlagung eines in dem Expansionsprofil befindlichen und / oder eingebrachten Druckmediums, Abkühlen und Entnehmen der gebildeten Hohlkörperstruktur, wobei erfindungsgemäß das Expansionsprofil durch eine thermoplastische Schlauchfolie gebildet ist und die Schmelztemperatur des Materials der Schlauchfolie größer ist als die Schmelztemperatur der Matrixfasern. Durch das erfindungsgemäße Vorsehen einer thermoplastischen Schlauchfolie im Gegensatz zu einem Elastomerschlauch, wobei die Schmelztemperatur des thermoplastischen Materials der Schlauchfolie größer ist als die Schmelztemperatur der thermoplastischen Matrixfasern, liegt darin begründet, dass die Schlauchfolie aufgrund ihrer dünnen Wandstärke kaum zusätzliches Gewicht in die Hohlkörperstruktur einbringt und innerhalb der Hohlkörperstruktur verbleiben kann. Entsprechende Schlauchfolien sind zudem insbesondere in der Anschaffung deutlich preiswerter als die bis dato eingesetzten Elastomerschläuche. Als Druckmedium werden üblicherweise Luft, Edelgase, Öle oder Wasser eingesetzt. Zum Erwärmen können beispielsweise Infrarotstrahler oder auch Konvektionsöfen oder vergleichbare Wärmequellen eingesetzt werden. Für den Fall, dass die Verstärkungsfasern eine elektrische Leitfähigkeit aufweisen, kann auch eine induktive Erwärmung des Hohlkörpers erfolgen. Der Schritt des Erwärmens des Hohlkörpers bis über die Schmelztemperatur der Matrixfasern kann vor, während oder nach dem Aufnehmen des Hohlkörpers innerhalb des Formwerkzeug-Hohlraumes erfolgen.

Vorzugsweise ist die Schmelztemperatur des thermoplastischen Materials der Schlauchfolie wenigstens 30 Kelvin größer als die Schmelztemperatur der Matrixfasern. Unter Schmelztemperatur wird bei thermoplastischen Kunststoffen mit einem Schmelzintervall der Beginn des Schmelzintervalls verstanden. Dies gewährleistet eine ausreichende Prozesssicherheit bei der Verarbeitung bzw. bei der Durchführung des erfindungsgemäßen Verfahrens.

Die Schlauchfolie kann wenigstens zwei Schichten umfassen, wobei die Schmelztemperatur des Materials wenigstens einer der Schichten größer ist als die Schmelztemperatur der Matrixfasern. Insbesondere weist die Außenschicht, also diejenige Schicht der Schlauchfolie, welche der Innenoberfläche des Hohlkörpers zugewandt ist, sobald das Expansionsprofil bzw. die Schlauchfolie innerhalb des Hohlkörpers angeordnet ist, eine Verträglichkeit zu dem Material der thermoplastischen Matrixfasern und/oder die gleiche Schmelztemperatur auf, so dass eine stoffschlüssige Verbindung im Wege des Verschweißens oder Lötens realisiert werden kann. Vorzugsweise ist das Material der Außenschicht der mehrschichtigen Schlauchfolie identisch oder artgleich zu dem Material der Matrixfasern und mindestens eine der weiteren Schichten der Schlauchfolie ist durch ein Material gebildet dessen Schmelztemperatur größer ist als die Schmelztemperatur der Matrixfasern. Die Außenschicht kann somit als Übergangsschichtschicht zu der Innenoberfläche des Hohlkörpers dienen.

Bevorzugt sind mehrschichtige Schlauchfolien mittels eines Koextrusionsverfahrens hergestellt und die Schichten der Schlauchfolien stoffschlüssig miteinander verbunden. Gegebenenfalls befindet sich eine separate Haftvermittlerschicht zwischen den Schichten der Schlauchfolie, falls diese untereinander eine unzureichende Verträglichkeit aufweisen.

Der Verbund ist ein gewebter oder geflochtener Verbund aus thermoplastischen Matrixfasern und temperaturstabilen Endlos-Verstärkungsfasern. Ein derartiger Verbund kann als Hybridgarn-Verbund bezeichnet werden. Bevorzugt handelt es sich bei der Hohlkörperstruktur um einen rundgeflochtenen Verbund.

Die Matrixfasern können auch als thermoplastische Matrixbänder oder Matrixbändchen ausgebildet sein.

Die Schlauchfolie wird erfindungsgemäß bereits bei der Herstellung des Verbundes (beispielsweise während eines Flecht- oder Webvorganges) innerhalb des Hohlkörpers angeordnet. Hierunter wird ebenfalls ein erfindungsgemäßes Anordnen eines Expansionsprofils innerhalb des Hohlkörpers verstanden. Ein gegebenenfalls aufwendiges Einfädeln der Schlauchfolie in den Hohlkörper kann hierdurch umgangen werden.

Die temperaturstabilen Endlos-Verstärkungsfasern können durch Mineralfasern, insbesondere Glasfasern, und/oder Carbonfasern, und/oder hochtemperaturpolymere Fasern, und/oder Basaltfasern und/oder aus Fasern von nachwachsenden Rohstoffen gebildet sein. Temperaturstabil meint, dass die Endlos-Verstärkungsfasern während der Durchführung des erfindungsgemäßen Verfahrens keine signifikante thermische Schädigung erfahren und selbst nicht aufschmelzen. Endlos-Verstärkungsfasern sind Fasern, die den jeweiligen Hohlkörper in zumindest einer Richtung im Wesentlichen vollständig durchziehen.

Besonders vorteilhaft kann sich die Schlauchfolie während des Konsolidierens und / oder Thermoformens stoffschlüssig mit dem Hohlkörper verbinden(d.h. verbunden werden). Diese stoffschlüssige Verbindung kann zum einen durch die Wahl eines Materials der Schlauchfolie realisiert sein, welches eine Verträglichkeit zu dem Material der thermoplastischen Matrixfasern aufweist und sich so im Wege des Verschweißens oder Lötens stoffschlüssig mit der Innenoberfläche des Hohlkörpers verbindet (ein Beispiel wäre die Wahl von Polyamid für das Material der Matrixfasern und Polyamid 6.6 für das Material der Schlauchfolie), und/oder durch das Vorsehen einer Haftvermittlerschicht zwischen Hohlkörper und Schlauchfolie (z.B. bei Polyamid 6 oder Polyethylenterephthalat für das Material der Schlauchfolie und einem Polyolefin wie Polypropylen oder Polyethylen für das Material der Matrixfasern) hergestellt werden. Die entsprechende Haftvermittlerschicht kann hierbei bereits auf der Schlauchfolie und/oder der Innenoberfläche des Hohlkörpers aufgetragen sein. Alternativ oder in Ergänzung kann die Verträglichkeit der thermoplastischen Materialien von Matrixfasern und Schlauchfolie auch durch Zugabe einer Haftvermittlersubstanz zu einer oder beiden Materialien verbessert werden. Eine Haftvermittlersubstanz kann beispielsweise Maleinsäureanhydrid (MAH) umfassen. Alternativ kann die Haftvermittlersubstanz auch auf eines der oder beide Materialen (Matrixfasern oder Schlauchfolie) gepfropft werden (z.B. gepfoptes PP/MAH-Copolymer oder PE/MAH-Copolymer). Alternativ können auch sogenannte Blends verwendet werden, also Mischungen aus thermoplastischen Materialien, wobei eine Komponente des Blends mit dem Material der Schlauchfolie oder dem Material der Matrixfasern verträglich ist und hierüber der Stoffschluss gebildet wird.

Die Schlauchfolie weist vorzugsweise eine Wanddicke im Bereich von 0,01 bis 0,2 mm, weiter vorzugsweise im Bereich von 0,05 bis 0,1mm, weiter vorzugsweise im Bereich von 0,065 bis 0,085 mm auf. Entsprechende Wanddickenbereiche haben sich in Versuchen als optimaler Kompromiss zwischen notwendiger Druckfestigkeit und Eigengewicht der Schlauchfolie erwiesen.

Besonders bevorzugt ist die Hohlkörperstruktur Teil eines Frontends, Querträgers, Rahmens, Energieabsorbers oder Schwellers eines Fahrzeuges.

Entsprechend hergestellte Hohlkörperstrukturen können in der Weiterverarbeitung in ein Kunststoff-Spritzgusswerkzeug eingelegt und weiteres Kunststoffmaterial angespritzt werden, um weitere Funktionselemente wie z.B. Verrippungen, weitere Befestigungspunkte, Dekorbereiche oder Dichtungsabschnitte anzuformen oder zu bilden. Vorteilhafterweise kann hierbei die weiterhin innerhalb der Hohlkörperstruktur angeordnete Schlauchfolie erneut mit Druck beaufschlagt werden bzw. ein weiterhin innerhalb des Expansionsprofils bzw. der Schlauchfolie befindliches und / oder eingebrachtes Druckmedium druckbeaufschlagt werden, so dass ausreichender Gegendruck zu dem Spritzdruck des Kunststoff-Spritzgusswerkzeuges aufrechterhalten werden kann, so dass die Hohlkörperstruktur nicht kollabiert. Möglich ist zudem, dass das Kunststoff-Spritzgusswerkzeug selbst den Formwerkzeug-Hohlraum bildet und das Anspritzen von weiterem Kunststoffmaterial parallel oder nach dem Schritt des Konsolidierens und/oder Thermoformens erfolgt.

Die Erfindung umfasst ferner eine endlosfaserverstärkte Hohlkörperstruktur, die mit dem vorgenannten, erfindungsgemäßen Verfahren hergestellt wurde.

Im Folgenden wird die Erfindung anhand lediglich Ausführungsbeispiele darstellender Zeichnungen erläutert. Es zeigen schematisch:
- Fig. 1a,b: eine Übersichtsdarstellung des Verfahrensablaufs,
- Fig. 2: eine Querschnittdarstellung durch eine erfindungsgemäße Hohlkörperstruktur,
- Fig. 3: eine Querschnittdarstellung durch eine weitere erfindungsgemäße Hohlkörperstruktur,
- Fig. 4: eine Querschnittdarstellung durch eine weitere erfindungsgemäße Hohlkörperstruktur.

In den Figuren werden gleiche oder funktionsgleiche Elemente mit den gleichen Bezugszeichen versehen.

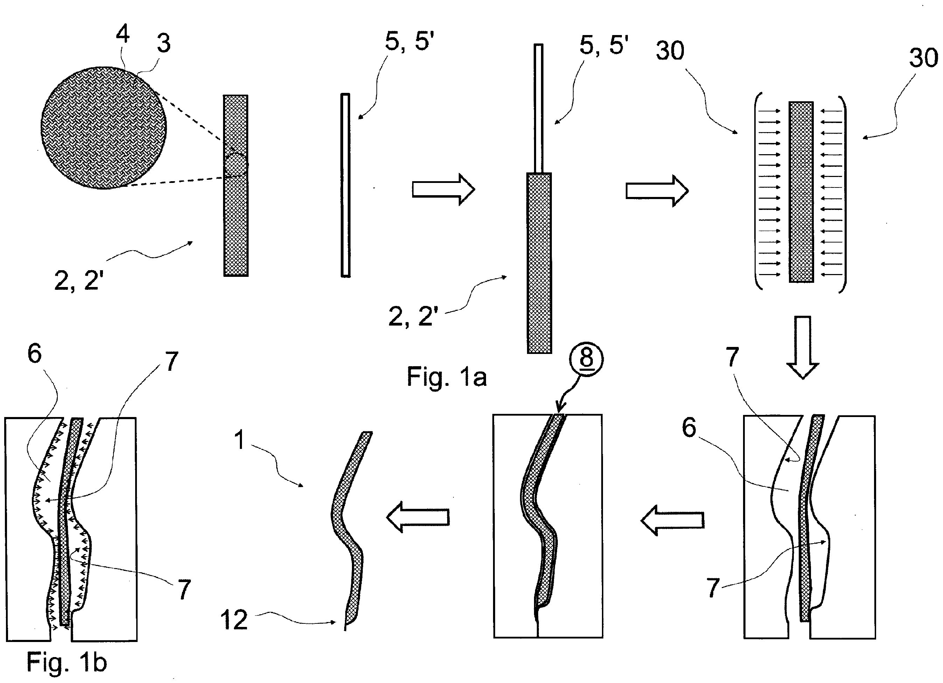

Die Fig. 1a zeigt schematisch eine Übersichtsdarstellung eines möglichen Verfahrensablaufs des erfindungsgemäßen Verfahrens. Das Verfahren zur Herstellung einer endlosfaserverstärkten Hohlkörperstruktur 1 umfasst dabei die folgenden Schritte:
Bereitstellen eines profilförmigen Hohlkörpers 2, wobei der Hohlkörper 2 aus einem Verbund 2' gebildet ist, der thermoplastische Matrixfasern 3 und temperaturstabile Endlos-Verstärkungsfasern 4 umfasst. Bei dem in diesem Ausführungsbeispiel gezeigten Verbund 2' handelt es sich um einen gewebten oder geflochtenen Verbund 2' aus thermoplastischen Matrixfasern und temperaturstabilen Endlos-Verstärkungsfasern 4. Das Verfahren umfasst ferner den Schritt des Anordnens eines Expansionsprofils 5 innerhalb des Hohlkörpers 2, wobei erfindungsgemäß das Expansionsprofil 5 durch eine thermoplastische Schlauchfolie 5' gebildet ist und die Schmelztemperatur des Materials der Schlauchfolie 5' größer ist als die Schmelztemperatur der Matrixfasern 3. Erfindungsgemäß erfolgt das Anordnen des Expansionsprofils 5 bzw. der Schlauchfolie 5' innerhalb des Hohlkörpers 2 bereits bei der Herstellung des Verbundes 2'. Erfindungsgemäß wird dies ebenfalls als Anordnen eines Expansionsprofils 5 bzw. einer Schlauchfolie 5' innerhalb des Hohlkörpers 2 verstanden. Das Verfahren umfasst weiterhin den Schritt des Erwärmens des Hohlkörpers 2 bis über die Schmelztemperatur der Matrixfasern 3 sowie das Aufnehmen des Hohlkörpers 2 innerhalb eines Formwerkzeug-Hohlraumes 6, der von mindestens einer Formwerkzeug-Wandung 7 umschlossen wird, welche die Kontur der Hohlkörperstruktur 1 definiert. Zum Erwärmen können beispielsweise Infrarotstrahler 30 oder auch Konvektionsöfen oder vergleichbare Wärmequellen eingesetzt werden. Für den Fall, dass die Verstärkungsfasern 4 eine elektrische Leitfähigkeit aufweisen, kann auch eine induktive Erwärmung des Hohlkörpers 2 erfolgen. Der Schritt des Erwärmens des Hohlkörpers 2 bis über die Schmelztemperatur der Matrixfasern 3 kann auch während oder nach dem Aufnehmen des Hohlkörpers 2 innerhalb des Formwerkzeug-Hohlraumes 6 erfolgen (vgl. Fig. 1b). In dem gezeigten Ausführungsbeispiel wird die Formwerkzeug-Wandung 7 von zwei einander zugewandten Formwerkzeug-Wandungen 7 gebildet, welche jeweils Teil einer Formwerkzeug-Hälfte sind. Ein weiterer Schritt des erfindungsgemäßen Verfahrens zur Herstellung einer endlosfaserverstärkten Hohlkörperstruktur 1 umfasst den Schritt des Konsolidierens und / oder Thermoformens des Hohlkörpers 2 durch Anlegen des Hohlkörpers 2 an die Formwerkzeug-Wandungen 7 mittels einer Druckbeaufschlagung eines in dem Expansionsprofil 5 befindlichen und / oder eingebrachten Druckmediums 8. Durch Expandieren des Expansionsprofils 5 bzw. der Schlauchfolie 5' mittels einer Druckbeaufschlagung eines in dem Expansionsprofil 5 bzw. der Schlauchfolie 5' befindlichen und / oder eingebrachten Druckmediums 8 wird der Hohlkörper 2 an die Formwerkzeug-Wandung 7 bzw. die Formwerkzeug-Wandungen 7 angelegt und bei einem entsprechenden Druck konsolidiert und thermogeformt. Die Formwerkzeug-Wandungen 7 bzw. die Formwerkzeuge können entsprechend zusätzlich temperiert sein. Nach dem Abkühlen der gebildeten Hohlkörperstruktur 1 erfolgt das Entnehmen der gebildeten Hohlkörperstruktur 1 aus dem Formwerkzeug. In dem Ausführungsbeispiel ist ebenfalls dargestellt, dass die Druckbeaufschlagung des in dem Expansionsprofil 5 befindlichen und / oder eingebrachten Druckmediums 8 lediglich von einer Seite des Expansionsprofils 5 bzw. der Schlauchfolie 5' erfolgt, wobei das entsprechend gegenüberliegende Ende durch Zusammenfahren der Formwerkzeug-Hälften bzw. durch Schließen der beiden Formwerkzeug-Wandungen 7 abgequetscht wird. Der abgequetschte Bereich 12 dient hierbei bei der gebildeten Hohlkörperstruktur 1 als Befestigungsabschnitt z.B. zur Aufnahme einer Schraubverbindung. Entsprechend hergestellte Hohlkörperstrukturen 1 können in der Weiterverarbeitung in ein Kunststoff-Spritzgusswerkzeug eingelegt werden, um weitere Funktionselemente wie z.B. Verrippungen, weitere Befestigungspunkte, Dekorbereiche oder Dichtungsabschnitte anzuformen bzw. anzuspritzen. Vorteilhafterweise kann hierbei die weiterhin innerhalb der Hohlkörperstruktur 1 angeordnete Schlauchfolie 5' erneut mit Druck beaufschlagt werden bzw. ein weiterhin innerhalb des Expansionsprofils 5 bzw. der Schlauchfolie 5' befindliches und / oder eingebrachtes Druckmedium druckbeaufschlagt werden, so dass ausreichender Gegendruck zu dem Spritzdruck des Kunststoff-Spritzgusswerkzeuges aufrechterhalten werden kann, so dass die Hohlkörperstruktur 1 nicht kollabiert. Die Schmelztemperatur des Materials der Schlauchfolie 5' ist wenigstens 30 Kelvin größer als die Schmelztemperatur der Matrixfasern 3. Die Schlauchfolie 5' verbindet sich während des Konsolidierens und / oder Thermoformens stoffschlüssig mit dem Hohlkörper 2. Die Schlauchfolie 5' weist eine Wanddicke im Bereich von 0,01 bis 0,2 mm, weiter vorzugsweise im Bereich von 0,05 bis 0,1mm, weiter vorzugsweise im Bereich von 0,065 bis 0,085 mm auf. Eine entsprechend hergestellte Hohlkörperstruktur 1 kann Teil eines Frontends, Querträgers, Rahmens, Energieabsorbers oder Schwellers eines Fahrzeugs sein.

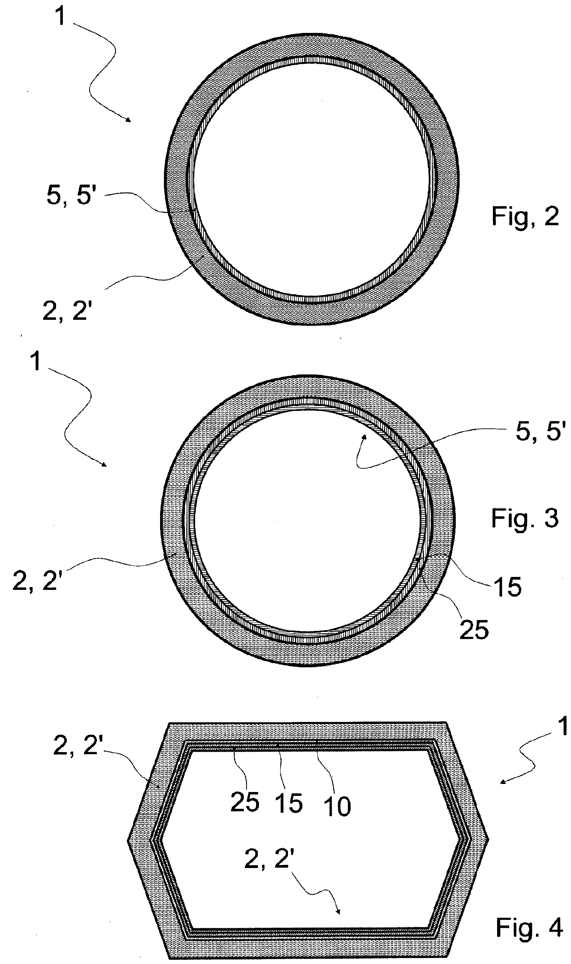

Die Fig. 2 zeigt eine schematische Querschnittsdarstellung durch eine erfindungsgemäße Hohlkörperstruktur. Die Hohlkörperstruktur 1 wurde hierbei durch das erfindungsgemäße Verfahren hergestellt. Die Hohlkörperstruktur 1 weist einen profilförmigen Hohlkörper 2 auf, wobei der Hohlkörper 2 aus einem Verbund 2' gebildet ist, der thermoplastische Matrixfasern und temperaturstabile Endlos-Verstärkungsfasern umfasst (die jeweiligen Fasern sind in Folge nicht mehr einzeln im Detail gezeigt). Die Matrixfasern bestehen aus einem thermoplastischen Material, das Polypropylen (PP) umfasst. Die Verstärkungsfasern sind durch Glasfasern gebildet. Innerhalb des Hohlkörpers 2 befindet sich eine thermoplastische Schlauchfolie 5', wobei die Schmelztemperatur des Materials der Schlauchfolie 5' größer ist als die Schmelztemperatur der Matrixfasern. Bei dem Material der Schlauchfolie handelt es sich um ein Polyamid (vorzugsweise PA6). Die Schmelztemperatur des Materials der Schlauchfolie 5' ist hierbei wenigstens 30 Kelvin größer als die Schmelztemperatur der Matrixfasern. Während des Konsolidierens und Thermoformens hat sich die Schlauchfolie 5' stoffschlüssig mit dem Hohlkörper 2 verbunden. Aufgrund der Unverträglichkeit von Polyamid und Polypropylen wurde die stoffschlüssige Verbindung über eine Haftvermittlerschicht (hier nicht im Detail dargestellt) hergestellt. Die Schlauchfolie 5' weist eine Wanddicke im Bereich von 0,01 bis 0,2 mm, weiter vorzugsweise im Bereich von 0,05 bis 0,1 mm, weiter vorzugsweise im Bereich von 0,065 bis 0,085 mm auf. Die Hohlkörperstruktur 1 kann Teil eines Frontends, Querträgers, Rahmens, Energieabsorbers oder Schwellers eines Fahrzeuges sein. Der Verbund 2' ist ein gewebter oder geflochtener Verbund 2' aus thermoplastischen Matrixfasern und temperaturstabilen Endlos-Verstärkungsfasern.

Die Fig. 3 zeigt eine weitere Querschnittsdarstellung einer endlosfaserverstärkten Hohlkörperstruktur 1, hergestellt durch das erfindungsgemäße Verfahren. Die innerhalb des profilierten Hohlkörpers 2 - wobei der Hohlkörper 2 aus einem Verbund 2' gebildet ist, der thermoplastische Matrixfasern und themperaturstabile Verstärkungsfasern umfasst - angeordnete Schlauchfolie 5'umfasst zwei Schichten 15 und 25. Die Schmelztemperatur des Materials wenigstens einer der Schichten 15 ist größer als die Schmelztemperatur der Matrixfasern. Das Material der thermoplastischen Matrixfasern umfasst Polyamid 6, das der Schicht 25 ebenfalls ein Polyamid 6 und das der Schicht 15 ein Polyamid 6.6. Die Schlauchfolie 5' wurde hierbei mittels eines Koextrusionsverfahrens hergestellt, wobei die Schichten 15 und 25 aufgrund ihrer Artgleichheit stoffschlüssig miteinander verbunden sind. Bei dem Verbund 2' handelt es sich ebenfalls um einen gewebten oder geflochtenen Verbund aus vorgenannten thermoplastischen Matrixfasern und temperaturstabilen Endlos-Verstärkungsfasern aus Carbon. Aufgrund der Gleichheit der verwendeten thermoplastischen Materialien für die thermoplastischen Matrixfasern und die Materialien der Schichten 15 und 25 sind die Schlauchfolie 5' und der Hohlkörper 2 stoffschlüssig miteinander verbunden.

Die Fig. 4 zeigt eine weitere Querschnittsdarstellung durch eine erfindungsgemäße Hohlkörperstruktur, wie diese durch ein erfindungsgemäßes Verfahren hergestellt wurde. Die endlosfaserverstärkte Hohlkörperstruktur 1 weist einen Hohlkörper 2 auf, wobei der Hohlkörper 2 aus einem Verbund 2' gebildet ist, der thermoplastische Matrixfasern 3 und temperaturstabile Endlos-Verstärkungsfasern 4 umfasst. Die thermoplastischen Matrixfasern sind hierbei durch ein Polypropylen-Material gebildet. Bei den Verstärkungsfasern handelt es sich um Glasfasern. Die innerhalb des Hohlkörpers 2 angeordnete bzw. befindliche Schlauchfolie 5' umfasst zwei Schichten 15 und 25, wobei die Schmelztemperatur des Materials wenigstens eine der Schichten 15, 25 größer als die Schmelztemperatur der Matrixfasern ist. Die Schlauchfolie 5' hat sich während des Konsolidierens und / oder Thermoformens stoffschlüssig mit dem Hohlkörper 2 verbunden. Das Material der Schicht 15 umfasst ein Polyethylenterephthalat (PET). Zur Herstellung einer stoffschlüssigen Verbindung zwischen dem Hohlkörper 2 bzw. dem Verbund 2' ist zwischen Schlauchfolie 5' und dem Hohlkörper 2 eine Haftvermittlerschicht 10 vorgesehen, über die die stoffschlüssige Verbindung hergestellt wird. Die innen liegende Schicht 25 der Schlauchfolie 5' umfasst ein Polyamid 6.6 (PA 6.6) dem als Haftvermittlersubstanz Maleinsäureanhydrid zugegeben wurde.

## Patentansprüche

1. Verfahren zur Herstellung einer endlosfaserverstärkten Hohlkörperstruktur (1), umfassend die folgenden Schritte:
- Bereitstellen eines profilförmigen Hohlkörpers (2), wobei der Hohlkörper (2) aus einem Verbund (2') gebildet ist, der thermoplastische Matrixfasern (3) und temperaturstabile Endlos-Verstärkungsfasern (4) umfasst, wobei der Verbund (2') ein gewebter oder geflochtener Verbund (2') aus thermoplastischen Matrixfasern (3) und temperaturstabilen Endlos-Verstärkungsfasern (4) ist,
- Anordnen eines Expansionsprofils (5) innerhalb des Hohlkörpers (2),
- Aufnehmen des Hohlkörpers (2) innerhalb eines Formwerkzeug-Hohlraums (6), der von mindestens einer Formwerkzeug-Wandung (7) umschlossen wird, welche die Kontur der Hohlkörperstruktur (1) definiert,
- Erwärmen des Hohlkörpers (2) bis über die Schmelztemperatur der Matrixfasern (3),
- Konsolidieren und/oder Thermoformen des Hohlkörpers (2) durch Anlegen des Hohlkörpers (2) an die Formwerkzeug-Wandung (7) mittels einer Druckbeaufschlagung eines in dem Expansionsprofil (5) befindlichen und/oder eingebrachten Druckmediums (8),
- Abkühlen und Entnehmen der gebildeten Hohlkörperstruktur (1),
wobei das Expansionsprofil (5) durch eine thermoplastische Schlauchfolie (5') gebildet ist und die Schmelztemperatur des Materials der Schlauchfolie (5') größer ist als die Schmelztemperatur der Matrixfasern (3),
**dadurch gekennzeichnet, dass**
bei dem Schritt des Anordnens des Expansionsprofils (5) innerhalb des Hohlkörpers (2) die Schlauchfolie (5') bereits bei der Herstellung des Verbundes (2') während eines Flecht- oder Webvorganges innerhalb des Hohlkörpers (2) angeordnet wird.

2. Verfahren nach Anspruch 1, **dadurch gekennzeichnet, dass** die Schmelztemperatur des Materials der Schlauchfolie (5') wenigstens 30 Kelvin größer ist als die Schmelztemperatur der Matrixfasern (3).

3. Verfahren nach Anspruch 1 oder 2, **dadurch gekennzeichnet, dass** die Schlauchfolie (5') wenigstens zwei Schichten (15, 25) umfasst, wobei die Schmelztemperatur des Materials wenigstens einer der Schichten (15) größer ist als die Schmelztemperatur der Matrixfasern (3).

4. Verfahren nach Anspruch 3, **dadurch gekennzeichnet, dass** die Schlauchfolie (5') mittels eines Koextrusionsverfahrens hergestellt ist und die Schichten (15, 25) stoffschlüssig miteinander verbunden sind.

5. Verfahren nach einem der vorstehenden Ansprüche, **dadurch gekennzeichnet, dass** sich die Schlauchfolie (5') während des Konsolidierens und/oder Thermoformens stoffschlüssig mit dem Hohlkörper (2) verbindet.

6. Verfahren nach Anspruch 5, **dadurch gekennzeichnet, dass** die stoffschlüssige Verbindung über eine Haftvermittlerschicht (10) hergestellt wird.

7. Verfahren nach einem der vorstehenden Ansprüche, **dadurch gekennzeichnet, dass** die Schlauchfolie (5') eine Wanddicke im Bereich von 0,01 bis 0,2 mm, weiter vorzugsweise im Bereich von 0,05 bis 0,1mm, weiter vorzugsweise im Bereich von 0,065 bis 0,085 mm, aufweist.

8. Verfahren nach einem der vorstehenden Ansprüche, **dadurch gekennzeichnet, dass** die Hohlkörperstruktur (1) Teil eines Frontends, Querträgers, Rahmens, Energieabsorbers oder Schwellers eines Fahrzeuges ist.

9. Endlosfaserverstärkte Hohlkörperstruktur (1), hergestellt durch ein Verfahren gemäß einem der vorstehenden Ansprüche 1 bis 8.

## Claims

1. A method for producing a continuous-fibre-reinforced hollow-body structure (1), comprising the following steps:
- providing a profile-shaped hollow body (2), wherein the hollow body (2) is formed using a composite (2'), which comprises thermoplastic matrix fibres (3) and temperature-stable continuous reinforcing fibres (4), wherein the composite (2') is a woven or braided composite (2') composed of thermoplastic matrix fibres (3) and temperature-stable continuous reinforcing fibres (4),
- arranging an expansion profile (5) within the hollow body (2),
- receiving the hollow body (2) within a mould cavity (6), which is surrounded by at least one mould wall (7), which defines the contours of the hollow-body structure (1),
- heating the hollow body (2) to above the melting point of the matrix fibres (3),
- consolidating and/or thermoforming the hollow body (2) by placing the hollow body (2) against the mould wall (7) by means of pressurising a pressure medium (8) located in and/or introduced into the expansion profile (5),
- cooling and removing the hollow-body structure (1) that has formed,
wherein the expansion profile (5) is formed by a thermoplastic tubular film (5') and the melting point of the material of the tubular film (5') is greater than the melting point of the matrix fibres (3),
**characterised in that**
in the step of arranging the expansion profile (5) within the hollow body (2), the tubular film (5') is already arranged within the hollow body (2) during a braiding or weaving operation when the composite (2') is being produced.

2. The method according to claim 1, **characterised in that** the melting point of the material of the tubular film (5') is at least 30 Kelvin greater than the melting point of the matrix fibres (3).

3. The method according to claim 1 or 2, **characterised in that** the tubular film (5') comprises at least two layers (15, 25), wherein the melting point of the material of at least one of the layers (15) is greater than the melting point of the matrix fibres (3).

4. The method according to claim 3, **characterised in that** the tubular film (5') is produced by means of a coextrusion method and the layers (15, 25) are joined together by a material bond.

5. The method according to one of the preceding claims, **characterised in that** the tubular film (5') is joined to the hollow body (2) by a material bond during the consolidation and/or thermoforming.

6. The method according to claim 5, **characterised in that** the material bond is produced by way of an adhesion promoter layer (10).

7. The method according to one of the preceding claims, **characterised in that** the tubular film (5') has a wall thickness in the range of 0.01 to 0.2 mm, more preferably in the range of 0.05 to 0.1 mm, more preferably in the range of 0.065 to 0.085 mm.

8. The method according to one of the preceding claims, **characterised in that** the hollow-body structure (1) is part of a front end, cross member, frame, energy absorber or rocker panel of a motor vehicle.

9. A continuous-fibre-reinforced hollow-body structure (1), produced by a method according to one of the preceding claims 1 to 8.

## Revendications

1. Procédé de fabrication d'une structure à corps creux (1) renforcée par fibre sans fin, comprenant les étapes suivantes :
- fourniture d'un corps creux (2) en forme de profil, le corps creux (2) étant formé à partir d'un composite (2') qui comprend des fibres matricielles (3) thermoplastiques et des fibres de renforcement (4) sans fin thermostables, le composite (2') étant un composite (2') tissé ou tressé, constitué de fibres matricielles (3) thermoplastiques et de fibres de renforcement (4) sans fin thermostables,
- disposition d'un profilé d'expansion (5) à l'intérieur du corps creux (2),
- logement du corps creux (2) à l'intérieur d'un espace creux (6) d'outil de formage, qui est entouré par au moins une paroi (7) d'outil de formage, laquelle définit le contour de la structure à corps creux (1),
- échauffement du corps creux (2) jusqu'au-delà de la température de fusion des fibres matricielles (3),
- consolidation et/ou thermoformage du corps creux (2) par application du corps creux (2) sur la paroi (7) d'outil de formage au moyen d'une application de pression d'un milieu de pression (8) se trouvant dans le profilé d'expansion (5) ou placé dans le profilé d'expansion,
- refroidissement et retrait de la structure à corps creux (1) formée,
le profilé d'expansion (5) étant formé par un film tubulaire (5') thermoplastique, et la température de fusion de la matière du film tubulaire (5') étant supérieure à la température de fusion des fibres matricielles (3)
**caractérisé en ce qu'**
à l'étape de la disposition du profilé d'expansion (5) à l'intérieur du corps creux (2), le film tubulaire (5') est déjà disposé à l'intérieur du corps creux (2) lors de la fabrication du composite (2) pendant une opération de tressage ou de tissage.

2. Procédé selon la revendication 1, **caractérisé en ce que** la température de fusion de la matière du film tubulaire (5') est supérieure d'au moins 30 kelvin à la température de fusion des fibres matricielles (3).

3. Procédé selon la revendication 1 ou 2, **caractérisé en ce que** le film tubulaire (5') comprend au moins deux couches (15, 25), la température de fusion de la matière d'au moins une des couches (15) étant supérieure à la température de fusion des fibres matricielles (3).

4. Procédé selon la revendication 3, **caractérisé en ce que** le film tubulaire (5') est fabriqué au moyen d'un procédé de coextrusion et **en ce que** les couches (15, 25) sont reliées entre elles par adhérence de matière.

5. Procédé selon l'une quelconque des revendications précédentes, **caractérisé en ce que** le film tubulaire (5') se relie au corps creux (2) par adhérence de matière pendant la consolidation et/ou le thermoformage.

6. Procédé selon la revendication 5, **caractérisé en ce que** la liaison par adhérence de matière est établie par l'intermédiaire d'une couche d'agent adhésif (10).

7. Procédé selon l'une quelconque des revendications précédentes, **caractérisé en ce que** le film tubulaire (5') présente une épaisseur de paroi située dans la plage de 0,01 à 0,2 mm, en outre de préférence dans la plage de 0,05 à 0,1 mm, en outre de préférence dans la plage de 0,065 à 0,085 mm.

8. Procédé selon l'une quelconque des revendications précédentes, **caractérisé en ce que** la structure à corps creux (1) est une partie d'une face avant, d'une traverse, d'un cadre, d'un absorbeur d'énergie ou d'un seuil d'un véhicule automobile.

9. Structure à corps creux (1) renforcée par fibre sans fin, fabriquée au moyen d'un procédé selon l'une quelconque des revendications 1 à 8.
